Europäisches Patentamt

European Patent Office

Office européen des brevets

(11) Veröffentlichungsnummer: **0 152 751**
A2

# (12) EUROPÄISCHE PATENTANMELDUNG

(21) Anmeldenummer: 85100292.3

(22) Anmeldetag: 14.01.85

(51) Int. Cl.⁴: **C 08 K 5/34,** C 08 K 5/52, C 08 L 21/00

(30) Priorität: 24.01.84 DE 3402309

(43) Veröffentlichungstag der Anmeldung: 28.08.85
Patentblatt 85/35

(84) Benannte Vertragsstaaten: CH DE FR LI NL SE

(71) Anmelder: BAYER AG, Konzernverwaltung RP
Patentabteilung, D-5090 Leverkusen 1 Bayerwerk (DE)

(72) Erfinder: v. Bonin, Wulf, Dr., Mendelssohnstrasse 30,
D-5090 Leverkusen 1 (DE)
Erfinder: Matenar, Gerd, Robert-Stolz-Strasse 24,
D-5632 Wermelskirchen (DE)

(54) Kautschukmischungen und daraus durch Vulkanisation hergestellte Formkörper.

(57) Für den vorbeugenden Brandschutz eignen sich Kautschukmischungen, die Salze von Cyanursäure oder Cyanursäurederivaten enthalten.

ACTORUM AG

EP 0 152 751 A2

BAYER AKTIENGESELLSCHAFT     5090 Leverkusen, Bayerwerk

Konzernverwaltung RP
Patentabteilung     Pv(Jo)/by-c

23. Jan. 1984

Kautschukmischungen und daraus durch Vulkanisation hergestellte Formkörper

Die Erfindung betrifft Kautschukmischungen, die als
Mischungsbestandteil Salze von Cyanursäure oder Cyanursäurederivaten enthalten und daraus durch Vulkanisation
hergestellte Formkörper, die für Zwecke des vorbeugenden
Brandschutzes Verwendung finden.

Für den vorbeugenden Brandschutz, z.B. flammgeschützte
Kabelmäntel oder Bauteile für Kabelschotts, werden Konstruktionselemente aus vulkanisierten Gummimischungen
verwendet, die Al-Oxidhydrat, Antimontrioxid oder Chlorparaffine enthalten.

Will man zu Formteilen gelangen, die in der Entflammbarkeit sehr unempfindlich sind und im Test "Sauerstoff-
Index gemäß ASTM D 2863", $O_2$-Indices (LOI) über 50 erbringen, so müssen Kautschuke verwendet werden, die Heteroatome, wie N, Halogen oder Si enthalten, wie Silikonkautschuke, Nitrilkautschuke, Fluorkautschuke, chlorsulfonierte oder nachchlorierte Olefinpolymere oder insbesondere
Polychloroprenkautschuke. Letztere haben sich aufgrund

Le A 22 770

der mit ihnen erzielbaren guten mechanischen Eigenschaften flammbeständig ausgerüsteter Kautschukmischungen bzw. Vulkanisate in besonderem Maße durchgesetzt.

Gute mechanische Eigenschaften der Kautschukformkörper lassen sich nur bei Verwendung von bestimmten, die Feuerbeständigkeit, bzw. Schwerentflammbarkeit herbeiführenden Füllstofftypen (z.B. Al-Oxidhydrate), in begrenzten Einsatzmengen erzielen.

Es hat sich gezeigt, daß selbst dann, wenn große Mengen von Al-Oxidhydraten in halogenhaltigen Kautschukmischungen zum Einsatz kommen, die im Brandfalle auftretenden Rauchgase sauer reagieren und die Al-Oxidhydrate offenbar nicht viel zur Neutralisation der pyrolytisch entstehenden HCl beitragen. Daher besteht der Wunsch nach im Hinblick auf die Schwerentflammbarkeit wirksamen und den Erhalt der guten mechanischen Eigenschaften sichernden Füllstoffen, die das Auftreten saurer Brandgase bei Beflammung der Vulkanisate vermindern.

Insbesondere besteht ein Bedarf nach feuerhemmenden Füllstoffen, die der Gummimischung neben Flammwidrigkeit auch Intumeszenzeigenschaften verleihen, d.h. eine Volumenexpansion bewirken.

Diese Füllstoffe sollten außerdem den Vulkanisationsprozeß und die sonstige Verarbeitbarkeit nicht stören

Le A 22 770

und die über 120°C liegenden üblichen Vulkanisations- und Verarbeitungstemperaturen ohne Funktionsverlust überstehen können.

Es wurde nun gefunden, daß als solche Füllstoffe Salze, insbesondere Phosphate von Cyanursäure und Cyanursäureabkömmlingen, insbesondere Melamin dienen können. Dieser Befund ist insofern überraschend, als das Melamin nur einen sehr schwach basischen Charakter hat, seine Phosphate oftmals bereits schwach sauer reagieren können und dennoch das Auftreten saurer Brandgase zu vermindern im Stande sind. Es war weiterhin nicht zu vermuten, daß ein derartiges salzartiges Material als guter Füllstoff geeignet sein könnte, der die mechanischen Eigenschaften der Vulkanisate kaum stört.

Schließlich hat sich herausgestellt, daß die die erfindungsgemäßen Zusatz- bzw. Füllstoffe enthaltenden Kautschukvulkanisate im Brandfalle Intumeszenzeigenschaften besitzen, d.h. eine Volumenvergrößerung erfahren, obgleich eine Beflammung des Phosphates selbst keinen Hinweis auf eine Intumeszenzschaumbildung bringt.

Gegenstand der vorliegenden Erfindung sind daher Kautschukmischungen, dadurch gekennzeichnet, daß sie Salze von Cyanursäure oder Cyanursäurederivaten enthalten.

Ein weiterer Gegenstand sind aus diesen Kautschukmassen durch Vulkanisation hergestellte Formkörper.

Le A 22 770

Insbesondere bezieht sich die Erfindung auf Formkörper aus vulkanisierten Ethylencopolymer- und vorzugsweise Polychloroprenkautschukmischungen, die Melaminphosphat enthalten.

Formkörper aus den vulkanisierten Kautschukmischungen sind z.B. Folien, Schläuche, Platten, Profile, Dichtungen, Blöcke, Drähte, Bänder, Fasern, Stopfen in geschäumter oder massiver Form, Deckschichten und Beschichtungen.

Die Salze können von organischen und anorganischen Säuren sein.

Beispiele sind Oxalate, Formiate, Citrate, Salze der Trimellitsäure, der Sulfanilsäure, der Chloressigsäure oder Salze der Halogenwasserstoffsäuren, Nitrate, Sulfate, Vanadate, Molybdate, Silikate, Borate, insbesondere aber Salze von Säuren des Phosphors, insbesondere von $H_3PO_4$, $H_4P_2O_7$ oder Polyphosphorsäure.

Bei den Salzen kann es sich um Additionsprodukte von 0,01 bis zu mehr als 3; insbesondere 0,2 bis 1,5 Mol Säure pro Cyanursäureabkömmling handeln.

Die Salze der Cyanursäureabkömmlinge sind in den Kautschukmischungen, bezogen auf Gesamtgewicht, in Mengen von 0,5 bis 55 Gew.-%, vorzugsweise 5 bis 30 Gew.-% enthalten. Sie können die üblichen brandschützenden oder brandtechnisch neutralen Füllstoffe ganz oder teilweise ersetzen.

Le A 22 770

- 5 -

Sie werden zweckmäßigerweise im Korngrößenbereich unter 0,1 mm Korndurchmesser angewandt, d.h. in fein gepulverter Form.

Geeignete Cyanursäureabkömmlinge sind z.B. Cyanursäure, Cyanamid, Dicyanamid, Dicyandiamid, Guanidin, Biguanid, Urazol, Urazolcyanurat, Polymere des Melamins, Melamincyanurat, Melamin, Cyanursäureester und -amide, insbesondere Melamin, das wegen seiner guten Zugänglichkeit bevorzugt wird.

Weiterhin kommen Harnstoff und seine Homologen bzw. Polymeren, Hydrozodicarbonamid, Allophanat, Biuret, deren Polykondensationsprodukte und vorwiegend deren wasserunlösliche, gegebenenfalls basisch modifizierte Kondensationsprodukte sowie Formaldehyd-Kondensationsprodukte dieser N-haltigen Verbindungen in Betracht.

Die Erfindung bezieht auch die Kombination aus rotem Phosphor in z.B. einer den Phosphorsäuren stöchiometrisch entsprechenden Menge und z.B. Melamin ein, da dieser beim Verbrennungsprozeß sofort in Phosphorsäuren übergeht und dann die Phosphate des Melamins in situ bildet.

Es sind auch Gemische von verschiedenen Salzen von Cyanursäureabkömmlingen einsetzbar.

Geeignete Kautschuke sind z.B. Naturkautschuk, Polyisopren, Polybutadien, Ethylen-Vinylacetat-Copolymere,

Le A 22 770

Polymerisate und verschiedenste Comonomere eingebaut enthaltende Polymerisate von Isopren, Buten, Butadien, Penten, Propylen, Ethylen, Acrylnitril, Styrol, Vinylchlorid, Vinylacetat, Ethylacrylat, Butylacrylat usw. Von besonderem technischem Interesse sind halogenhaltige Kautschuke wie Fluorelastomere, Chlorsulfoniere Olefinpolymere, insbesondere das technisch breit eingesetzte Polychloropren oder halogenfreie Kautschuk vom Typ der Olefin- bzw. Ethylencopolymerisate wie Ethylenvinylacetat, Ethylen-Propylen-Styrol-Copolymerisate, bzw. Blockcopolymerisate.

Diese Kautschuke werden dem Stande der Technik gemäß mit einer Vielzahl von Füllstoffen, Pigmenten, Verarbeitungs-, Weichmachungs-, Flammschutz- und Vulkanisationshilfsmitteln zu einer Kautschukmischung formuliert und dann verformt und vulkanisiert. Die Herstellung und Zusammensetzung solcher Kautschukmischungen, insbesondere auch von Polychloropren sind bekannt.

Die Vulkanisationstemperaturen sollten 250°C nicht überschreiten. Vorzugsweise liegen die Vulkanisationstemperaturen zwischen 80°C und 200°C.

Die erfindungsgemäßen Kautschukmischungen bzw. Vulkanisate werden dort eingesetzt, wo schwer entflammbare elastische Materialien mit guten mechanischen Eigenschaften erforderlich sind.

Le A 22 770

Da die erfindungsgemäßen Mischungen bzw. Vulkanisate bei Beflammung eine Volumenvergrößerung erfahren, sind sie besonders gut geeignet, in massiver, poröser oder geschäumter Form zum Abdichten von Kabelschotts in Gestalt von Dichtungsblöcken oder vorgeformten Manschetten zu dienen. Es lassen sich aber auch der Brandsicherheit dienende Kabelmäntel, Fugenprofile, Dichtungen, Rohrhalbschalen, beschichtete Gewirke, Gewebe, Vliese oder Garne und Fasern, beschichtete steife oder flexible Platten oder auch Folien aus dem erfindungsgemäßen Material herstellen. Von besonderem Interesse sind auch Dichtungsprofile aus einem derartigen Material, die in Form von Hohl- oder Massivprofilen ausgebildet sein können. Es ist weiterhin möglich, Folien aus dem erfindungsgemäßen Material oder ein- bzw. beidseitig damit beschichtete metallische oder textile Unterlagen als dem Brandschutz dienende Folien, Schürzen bzw. Vorhänge einzusetzen bzw. daraus Bandagen herzustellen, mit denen die zu schützenden Objekte umwickelt oder kaschiert werden können.

Auch Verbundwerkstoffe mit metallischen, mineralischen oder organischen Verstärkungs- oder Trägerelementen sind in Betracht zu ziehen.

Die erfindungsgemäßen Kautschukmischungen können vor oder nach der Vulkanisation in Form von Platten, Folien, Profilen, Bändern, Granulaten weiteren Verarbeitungs- und Verformungsprozessen unterworfen werden. Auch sind Extrusions- oder Spritzgußverfahren neben Preß-, Stanz- oder Rakelverfahren in Betracht zu ziehen.

Le A 22 770

In den folgenden Beispielen wird eine Chloroprenkautschukmischung (vgl. G. Matenar und E. Rohde, Kautschuk und Gummi Kunststoffe, Heft 5, 30, S. 289 (1977), Heft 6, 30, S. 363 (1977)), die Al-Oxidhydrat und Polychloroprenkautschuk im Gewichtsverhältnis 1:1 enthält, als Basis verwendet (1). Dann werden 25 Gew.-% (2) bzw. 50 Gew.-% (3) des Al-Oxidhydrats durch ein auf Korndurchmesser unter 0,1 mm vermahlenes aus 1 Mol Melamin und 0,75 Mol $H_3PO_4$ hergestelltes Melaminphosphat er-setzt.

Aus der Mischung werden durch 10-minütiges Verpressen bei 150°C Vulkanisate hergestellt, und zwar in Form von Platten 150 x 150 x 5 mm, als Normring I und in Form von Quadern 4 x 8 x 12 cm.

Es werden folgende Werte gemessen:

Le A 22 770

| Beispiel | 1 | 2 | 3 |
|---|---|---|---|
| Dichte (g/cm$^3$) | 1,84 | 1,64 | 1,61 |
| Mooneyviskosität ML 1+4; 100°C, Mischung | 67 | 62 | 67 |
| Festigkeit (MPa) Normring I | 4,1 | 4,8 | 3,5 |
| Festigkeit 100 % Dehnung (MPa) | 3,5 | 3,2 | 3,2 |
| Härte Shore A | 86 | 86 | 85 |
| Rückprallelastizität (%) | 22 | 23 | 23 |
| 5 Min. Beflammung eines Streifens 2,5 x 2,5 x 25 mm | | | |
| LOI-Werte | >50 | >50 | >50 |
| pH des Rauchgases nach Entfernen der Flamme | 1 | - | 8 |
| Intumeszenz (Vol.-%) | 3 | 25 | 90-125 |

Von besonderer Bedeutung im Sinne der Erfindung ist, daß Formteile in Gestalt von Teststreifen 2,5 x 2,5 x 25 mm bei Beflammung mit der entleuchteten Flamme eines Erdgas-Bunsenbrenners Intumeszenz zeigen, wenn sie Melaminphosphat enthalten. Dieser Umstand führt dazu, daß Elektrokabel, die von Halterungen aus dem erfindungsgemäßen Vulkanisat dichtend umschlossen werden auch dann noch dicht umschlossen bleiben, wenn die Kabelmäntel bei Feuereinwirkung verbrennen, weil die intumeszierende Kautschukmischung die gebildeten Hohlräume ausfüllt.

Nach Entfernen der Flamme des Brenners wird kein Nachbrennen der Vulkanisate beobachtet. Die abziehenden

Le A 22 770

Gase haben bei (1) stark sauren Charakter, bei der erfindungsgemäßen Rezeptur (3) sind sie schwach basisch und wenig korrosiv. Die Messung erfolgte nach Entfernung der Brennerflamme mittels eines Streifens feuchten pH-Papiers.

## Beispiel 4

In einer peroxydisch vernetzbaren Kautschukmischung auf Basis von Ethylen-Vinylacetat-Copolymerisat (45 % Vinylacetat), die mit 50 Gew.-%, bezogen auf Copolymerisat, an Al-Oxyhydrat flammgeschützt ist, wird die Hälfte des Al-Oxyhydrats durch das in Beispiel 2 verwendete Melaminphosphat ersetzt. Die Vulkanisation wird bei den 3 mm dicken Testplatten in der Presse 15 Min. bei 150°C vorgenommen.

Aus der nur Al-Oxyhydrat enthaltenden Vergleichsplatte und aus der Melaminphosphat enthaltenden Musterplatte werden jetzt Teststreifen der Abmessungen 3 x 3 x 25 mm geschnitten und wie bei den vorherigen Beispielen auf Intumeszenz durch Beflammung geprüft. Während die nur Al-Oxyhydrat enthaltende Probe keine Intumeszenz zeigt, erfolgt bei dem Melaminphosphat enthaltenden Muster eine Volumenexpansion auf ca. 200 %. Es bildet sich ein feuerwiderstandsfähiger Carbonisierungsschaum.

Le A 22 770

Patentansprüche

1. Kautschukmischungen, dadurch gekennzeichnet, daß sie Salze von Cyanursäure oder Cyanursäurederivaten enthalten.

2. Kautschukmischungen gemäß Anspruch 1, dadurch gekennzeichnet, daß als Kautschuk Ethylen-Copolymere oder Polychloroprentypen verwendet werden.

3. Kautschukmischungen gemäß Anspruch 1, dadurch gekennzeichnet, daß als Salze von Cyanursäureabkömmlingen Phosphate des Melamins verwendet werden.

4. Kautschukmischungen gemäß Anspruch 1, dadurch gekennzeichnet, daß sie, bezogen auf Gesamtgewicht, 0,5 bis 55 Gew.-%, vorzugsweise 5 bis 30 Gew.-% an Salzen von Cyanursäure oder Cyanursäurederivaten enthalten.

5. Formkörper, erhalten durch Vulkanisation der Kautschukmischungen gemäß Ansprüchen 1 bis 4.

Le A 22 770